# EUROPÄISCHE PATENTSCHRIFT

(11) **EP 1 504 868 B1**
(45) Veröffentlichungstag und Bekanntmachung des Hinweises auf die Patenterteilung: **10.10.2007**
(21) Anmeldenummer: 04017637.2
(22) Anmeldetag: 26.07.2004
(51) Int. Cl.: B29B 13/02, B29C 43/00, B29C 43/48, B29C 35/06, B29C 35/08, B29C 35/10

(54) **Verfahren und Vorrichtung zur Herstellung von Formteilen aus Kunststoff**
Process and apparatus for making plastic shaped parts
Procédé et dispositif pour la fabrication des pièces moulées en matières plastiques

(30) Priorität: 07.08.2003 DE 10336931
(43) Veröffentlichungstag der Anmeldung: 09.02.2005
(73) Patentinhaber: Neu, Werner, Dr., 89281 Altenstadt-Illereichen (DE)
(72) Erfinder: Neu, Werner, Dr., 89281 Altenstadt-Illereichen (DE)
(74) Vertreter: Junius, Walther

(56) Entgegenhaltungen:
- EP-B- 0 226 946
- DE-A- 3 637 905
- DE-A- 4 022 582
- DE-A- 19 707 665
- DE-B- 1 294 648
- US-A- 3 325 859
- US-A- 4 923 658

## Beschreibung

Die Erfindung betrifft ein Verfahren und eine Vorrichtung zur Herstellung von Gegenständen aus Kunststoff durch oberflächliche Erhitzung von auf einem Transportband liegenden Kunststoffteilchen bis auf Schmelztemperatur an ihrer Oberfläche und anschließender Formgebung zu einem Produkt unter Krafteinwirkung, bei dem man vor der Wärmebehandlungsstrecke auf dem Transportband die Kunststoffteilchen übereinanderliegend in einer Höhe von nur wenigen übereinanderliegenden Kunststoffteilchen aufschichtet, bei dem man ein gelochtes Transportband verwendet, dessen Löcher kleiner sind als der Durchmesser der Kunststoffteilchen, bei dem man auf die Schicht von Kunststoffteilchen mit einem strömenden Heizmedium so kurzzeitig einwirkt, dass nur die Oberflächen der Kunststoffteilchen angeschmolzen werden.

Kunststoffgranulat an seiner Oberfläche anzuschmelzen und dann zu Formteilen, insbesondere Platten, weiterzuverarbeiten, ist aus der DE 40 22 582 C2 bekannt geworden. Wenn solche Platten beachtliche Stärke haben sollen, ist es bekannt geworden, mehrere Anschmelzanlagen über einander anzuordnen und die Anschmelzprodukte auf einem gemeinsamen durch die Formstation führenden Transportband übereinanderzuschichten.

Aus der DE 197 07 665 A1 ist es weiter bekannt geworden, oberflächlich angeschmolzenen Granülen an einem Ort zusammenzubringen und vor der Formung zu mischen.

Der Vorteil dieser Anlagen ist die erhebliche Energieeinsparung, die dadurch erzielt wird, daß nur die Oberfläche der Granülen auf Schmelztemperatur zu erhitzen ist, während in herkömmlichen Produktionsverfahren die ganze Granüle aufzuschmelzen war, sowie auch der geringere Zeitaufwand für das Anschmelzen und auch das Abkühlen auf Entformungstemperatur. Schließlich ist auch der apparative Aufwand geringer.

Aus der DE 1 294 648 ist ein Verfahren und eine Vorrichtung zur Herstellung von gemusterten Kunststoffbahnen bekannt geworden, bei der die die Kunststoffbahn bildenden thermoplastischen Kunststoffkörner vollständig durcherwärmt und auf eine Temperatur kurz unterhalb des Schmelzpunktes gebracht in beheizten Pressen verpresst werden. Die Kunststoffkörner werden bis zum Verpressen auf dem Wärmeniveau kurz unterhalb des Schmelzpunktes gehalten, bevor sie der Presseinrichtung zugeführt werden. Auch für dieses Verfahren ist ein großer Energieaufwand notwendig.

Die EP 0 226 946 B1 betrifft ein Verfahren zur kontinuierlichen Herstellung von Bahnenware aus thermoplastischen Kunststoffen für das Bauwesen. Das Verfahren dient dazu, ein lunkerfreies Produkt auch bei höherer Produktionsgeschwindigkeit zu fertigen. Hierzu wird eine auf einem Metallförderband geschüttete Schicht aus Kunststoffteilchen von unten durch eine Beheizung des Metallförderbandes und von oben durch Wärmestrahlung jeweils gleichmäßig bis in die Mitte der Schicht durcherwärmt, bevor sie der Presseinrichtung zugeführt und unter Pressdruck abgekühlt wird. Für diese Verfahren ist für die vollständige Durcherwärmung der Kunststoffteilchen ebenfalls hoher Energieaufwand nötig.

Problematisch ist bei der Herstellung insbesondere dickerer Gegenstände die Erzielung einer gleichmäßigen Anschmelzung aller Granülen auf ihrer Oberfläche, wie sie erforderlich ist, um homogene Produkte zu fertigen. Denn beim Durchströmen einer Granulatschicht nimmt die Temperatur des gasförmigen Heizmediums rasch ab, mit der Folge, daß die zuerst umströmten Granülen in zu großer Oberflächentiefe, die zuletzt vom Heizmedium umspülten Granülen zu wenig angeschmolzen sind. Ist die Granulatschicht zu stark, so verdichtet sich beim Durchströmen des Heizmediums von oben nach unten der obere Teil der Schicht zu einer gasundurchlässigen Schmelzmasse und die Granülen im unteren Teil werden überhaupt nicht angeschmolzen. Die Verwendung mehrerer übereinander angeordneter, mit dünneren Granulatschichten beschickter Anschmelzvorrichtungen gleichzeitig erhöht die Anschaffungs und Betriebskosten der Anlage.

Die Erfindung vermeidet die Nachteile des Standes der Technik. Es ist das Ziel und die Aufgabe der Erfindung, mit einfachen Mitteln eine Anschmelzung der Kunststoffteilchen in einer Weise zu erreichen, daß sie in dem das Verfahren abschließenden Form- und Preßvorgang ein völlig homogenes Produkt bilden, das sich von einem Produkt aus einer homogenen Kunststoffschmelze nicht unterscheidet.

Die Erfindung besteht darin, dass man in der Wärmebehandlungsstrecke ein gasförmiges Heizmedium in benachbart nebeneinander liegenden Kanälen in Gegenrichtung strömen lässt, so dass das heiße gasförmige Heizmedium die auf dem Transportband liegenden Kunststoffteilchen während des Transportes wechselseitig von oben und von unten durchströmt.

Zur Durchführung dieses Verfahrens dient eine Vorrichtung, die sich dadurch auszeichnet, dass als Heizmedium ein heißes gasförmiges Medium verwendet wird, daß das Transportband durch eine Vielzahl von einander benachbarten Kanälen geführt ist, in denen das Heizmedium jeweils in entgegengesetzter Richtung strömt, und daß das Tranportband mit einer Vielzahl von Löchern versehen ist, deren Durchmesser kleiner ist als die Durchmesser der Kunststoffteilchen, dass als Heizmedium ein heißes gasförmiges Medium verwendet wird, wobei das heiße gasförmige Medium die auf dem Transportband liegenden Kunststoffteilchen während des Transportes wechselseitig von oben und von unten durchströmt.

Hiermit gelingt es, Kunststoffteilchen gleichmäßig an ihren Oberflächen anzuschmelzen und dann dem Form- und oder Preßvorgang zuzuführen und auf diese Weise lunkerfreie Produkte mit geringem Energieaufwand herzustellen.

Es ist vorteilhaft, dass man auf dem Transportband die Kunststoffteilchen in einer Höhe von vorzugsweise einer oder nur wenigen übereinander liegender Kunststoffteichen aufschichtet daß man das Transportband durch eine Vielzahl von einander benachbarten Kanälen führt, in denen das Heizmedium jeweils in entgegengesetzter Richtung strömt, daß man das Transportband mit einer Geschwindigkeit laufen läßt, bei der am Ende des Transportbandes die Kernbereiche der Kunststoffteilchen nicht aufgeschmolzen sind, und daß man dem Transportband eine mechanische Preß- oder Formvorrichtung nachschaltet.

Dabei ist es vorteilhaft, daß man die Transportbandgeschwindigkeit und die Heizmediumtemperatur in Abhängigkeit von dem Oberflächen-Anschmelz-Zustand der Kunststoffteilchen steuert.

Im Fall dieser Erhitzung durch ein heißes gasförmiges Medium liegt der Erfindung die Erkenntnis zugrunde, daß man in recht dünnen Granulatschichten die Granülen gleichmäßig anschmelzen kann, wenn man den Anschmelzvorgang gleichzeitig von oben und unten bzw. von rechts und von links vornimmt und wenn man die Förderung durch die Anschmelzanlage mit so hoher Geschwindigkeit erfolgen laßt, daß bei einem langsamer laufenden Förderband in der Ausformanlage die dort benötigte Menge an angeschmolzenen Granülen trotzdem erhalten wird.

Wenn also das strömende Heizmedium ein heißes Gas ist, bewegt man eine mit Löchern versehen Auflage, deren LochDurchmesser kleiner als der Durchmesser der Kunststoffteilchen ist, und läßt das Heizmedium in benachbart nebeneinander liegenden Kanälen in Gegenrichtung strömen.

Dabei geht man vorteilhafter Weise so vor, daß die Auflage ein Transportband ist, daß man auf dem Transportband die Kunststoffteilchen in einer Höhe von vorzugsweise einer oder nur wenigen übereinander liegender Kunststoffteichen aufschichtet, daß man das Transportband durch eine Vielzahl von einander benachbarten Kanälen führt, in denen das Heizmedium jeweils in entgegengesetzter Richtung strömt, daß man das Transportband mit einer Geschwindigkeit laufen läßt, bei der am Ende des Transporbandes die Kernbereiche der Kunststoffteilchen nicht aufgeschmolzen sind, und daß man dem Transportband eine mechanische Preß- oder Formvorrichtung nachschaltet.

Dabei ist es vorteilhaft, daß man die Transportbandgeschwindigkeit und die Heizmediumtemperatur in Abhängigkeit von dem Oberflächen-Anschmelz-Zustand der Kunststoffteilchen steuert.

Weiter ist es vorteilhaft, daß man an der Beschickungsvorrichtung die Schichthöhe der Kunststoffteilchen auf dem Transportband einstellt.

Zur optimalen Einstellung des Anschmelzvorganges kann man so vorgehen, daß man Heizkanäle einzeln oder paaweise aus dem Heizmediumumlauf abschaltet.

Es besteht auch die Möglichkeit, daß man zwischen eine Gruppe von Heizmediumkanälen eine weitere Beschickungsvorrichtung anordnet.

Dabei kann es vorteilhaft sein, daß man der weiteren Beschikkungsvorrichtung einen Rechen als Mischvorrichtung nachschaltet.

Ein besonderer Vorteil dieses Verfahrens ist es, daß man Kunststoffteilchen unterschiedlicher chemischer Zusammensetzung und/oder unterschiedlichen Schmelzpunktes zusammenmischen kann und der Wärmebehandlung unterziehen kann, wobei man ein mechanisch homogenes Endproduckt nach dem Zusammenpressen zu der finalen Form erhält. Das hat besondere Bedeutung bei der Wiederverarbeitung von Altkunsttstoffen, bei dem sich ja oftmals chemisch ungleiche Teile nicht aus den Anlieferungen trennen lassen, sodaß die Notwendigkeit besteht, chemisch inhomogene Kunstoffmassen zu einem homogenen Endprodukt zu verarbeiten.

Zur Durchführung dieses Verfahrens benutzt man eine Vorrichtung, bei der vor der Heißluftbehandlungsstrecke eine Beschichtungsvorrichtung angeordnet ist, mit der die Kunststoffteilchen auf dem Transportband übereinanderliegend aufgeschichtet werden und die sich erfindungsgemäß dadurch auszeichnet, daß die Beschichtungsvorrichtung auf dem Transportband die Kunststoffteilchen in einer Höhe von vorzugsweise einer oder nur wenigen übereinander liegenden Kunststoffteichen aufschichtet, daß das Transportband durch eine Vielzahl von einander benachbarten Kanälen geführt ist, in denen das Heizmedium jeweils in entgegengesetzter Richtung strömt, daß das Transportband mit einer Geschwindigkeit läuft, bei der am Ende des Transportbandes die Kernbereiche der Kunststoffteilchen nicht aufgeschmolzen sind, und daß dem Transportband eine mechanische Preß- oder Formvorrichtung nachschaltet ist.

Mit dieser Vorrichtung gelingt es, Kunststoffteilchen beliebiger Menge gleichmäßig an ihren Oberflächen anzuschmelzen und dann dem Form- und/oder Preßvorgang zuzuführen und auf diese Weise lunkerfreie Produkte mit geringem Energieaufwand herzustellen.

Mit einer Steuerungsvorichtung für die Transportbandgeschwindigkeit und die Heizmediumtemperatur kann man dabei die Transportbandgeschwindigkeit und die Heizmediumtemperatur in Abhängigkeit von dem Oberflächen Anschmelz-Zustand der Kunststoffteilchen so steuern, daß man zu optimalen Produkten gelangt.

Wenn an der Beschickungsvorrichtung die Schichthöhe der Kunststoffteilchen auf dem Transportband z.B. durch einen Schieber einstellbar ist, wird es möglich, durch Einstellung der Schichthöhe und gleichzeitige Einstellung der Transportbandgeschwindigkelt und der Heizmediumtemperatur nicht nur zu optimalen Produkten zu kommen, sondern auch die Anlage äußerst wirtschaftlich zu betreiben.

Hat man einen Rohstoff zu verarbeiten, bei dem nicht die volle Länge der Anlage benötigt wird, ist es zweckmäßig, daß man Heizkanäle einzeln oder paaweise aus dem Heizmediumumlauf abschaltet.

Will man auf der erfindungsgemäßen Anlage ein Produkt herstellen, das aus einem Gemisch zweier Kunststoffe mit unterschiedlicher Schmelztemperatur besteht, kann es zweckmäßig sein,daß man zwischen eine Gruppe von Heizmediumkanälen eine weitere Beschickungsvorrichtung anordnet. Mit der ersten Beschikkungsvorrichtung wird der Kunststoff höherer Schmelztemperatur, mit der zweiten Beschickungsvorrichtung der Kunststoff niedrigerer Schmelztemperatur auf das Transportband gegeben

Zur besseren Durchmischung beider Kunststoffe kann es zweckmäßig sein,daß man der weiteren Beschickungsvorrichtung einen Rechen als Mischvorrichtung nachschaltet.

Die erfindungsgemäße Vorrichtung eignet sich nicht nur zur Verarbeitung von neuem granuliertem Kunststoffmaterial, sondern auch von kleingeshreddertem Regenerat, ja sogar aus einem Gemisch von unterschiedlichen Kunststoffen, wie es bei der Aufarbeitung von Müll anfällt. Bei dieser Verarbeitung benötigt man zur Verarbeitungsvorbereitung lediglich einen gegen Verschleiß unanfälligen Shredder, nicht dagegen verschleißempfindliche Extruder.

Bei der Verarbeitung von geshredderten Kunststoffteilchen unterschiedlicher Schmelztemperatur wird man nuroder zuerst die niedrigschmelzenden Kunststoffteilchen anschmelzen oder aufschmelzen und mit ihnen die höherschmelzen ummanteln.

Bei der Verarbeitung von Neumaterial wird man eine Behandlungsstrecke wählen, bei der man nach einer Behandlung des höherschmelzenden Materials in einer ersten Erhitzungsphase ein niedrigerschmelzendes Material in einer zweiten Phase dem höherschmelzenden Material zugibt, wodurch beide Materialien an der Oberfläche angeschmolzen werden und dadurch beim anschliessenden Preßvorgang besonders innig zusammensintern.Auf diese Weise erreicht man für die bei höherer Temperatur schmelzenden Kunststoffteilchen eine längere Verweilzeit in der Behandlungsvorrichtung und eine intensivere Hitzebehandlung.

Während bei den vorstehend beschriebenen Ausführungsformen davon ausgegangen wurde, daß die Auflage für die Kunststoffteilchen, horizontal oder genähert horizontal angeordnet ist, besteht die Möglichkeit, die Behandlung der Kunststoffteilchen auch in einem vertikalen oder schrägen Schacht durchzuführen, sie in diesem Schacht kontinuierlich durchlaufend oder in einzelnen Chargen stehend der Wärmebehandlung zu unterziehen.

So ist es möglich, wenn das strömende Heizmedium ein Gas ist, daß die Kunststoffteilchen in einem vertikalen oder schrägen Schacht mit durchlochten und von dem Heizmedium durchströmten Schachtwänden befindlich sind, den sie durchfließen.

Wenn das strömende Heizmedium ein Gas ist, ist es auch möglich, daß die Kunststoffteilchen in einem vertikalen oder schrägen Schacht mit durchlochten und von dem Heizmedium durchströmten Schachtwänden befindlich sind, und daß der Schacht am untereren Ende ein Tor aufweist, das die Kunststoffteilchen während der Behandlungsphase mit dem Heizmedium aufstaut und welches am Ende der jeweiligen Behandlungsphase geöffnet wird.

Bei einer solchen Vorrichtung ist es zweckmäßig, daß den das Heizmedium führenden, quer zum Schacht verlaufenden Kanälen eine Steuerschieberanordnung vor- und nachgeschaltet ist, die das Heizmedium in den Kanälen zeitlich nacheinander hin- und her strömen läßt.

Diese Steuerschieberanordnung kann vorteilhafterweise aus vier bewegliche Steuerschieber bestehen, die paarweise an den dem Schacht abgekehrten Enden der das Heizmedium führenden Kanäle angeordnet sind und die im Takt paarweise gegeneinander verschoben werden, wobei jeder Heizmedium führende Kanal an seinen Enden ein dem jeweiligen Steuerschieber zugeordnetes Loch aufweist.

Die erfindungsgemäße Vorrichtung kann aber auch mit Wärmestrahlung arbeiten, die für Wärmestrahlung durchlässige Schachtwände eines verikalen oder schrägen Schachtes durchstrahlt.

Dabei kann auch dieser Schacht an seinem unteren Ende ein jeweils nach der Strahlungsbehandlung zu öffnendes Tor aufweisen.

In den einzelnen Kanälen für das strömende Heizmedium wird man versuchen, die Strömung zu einem gleichmäßigen Strom zu formen. In einzelnen Fällen gelingt das nicht, so z.B.bei seitlich in den Kanal eintretendem Heizmedium. Das führt zu Verwirbelungen und anderen Strömungsungleichmäßigkeiten, die aber für die oberflächliche Erhitzung von Kunststoffteilchen von Vorteil sein können, weil sie die Ursache von Querströmungen in der zu erhitzenden Kunststoffteilchenschicht sein können.

Das Wesen der Erfindung ist nachstehen anhand von schematisch in der Zeichnung dargestellten Ausführungsbeispielen von Vorrichtungen zur oberflächlichen Anschmelzung von Granulat oder sonstigen kleinen Kunststoffteilchen näher erläutert. Es zeigen:
- Fig.1: eine Vorrichtung mit horizontalem Vorschub der auf einem Transportband liegenden Kunststoffteilchen für eine Anschmelzung beim kontinuierlichen Durchlauf,
- Fig.2: eine Vorrichtung mit vertikalem, durch ein Tor verschließbarem Schacht für eine successive Anschmelzung von einzelnen Chargen.

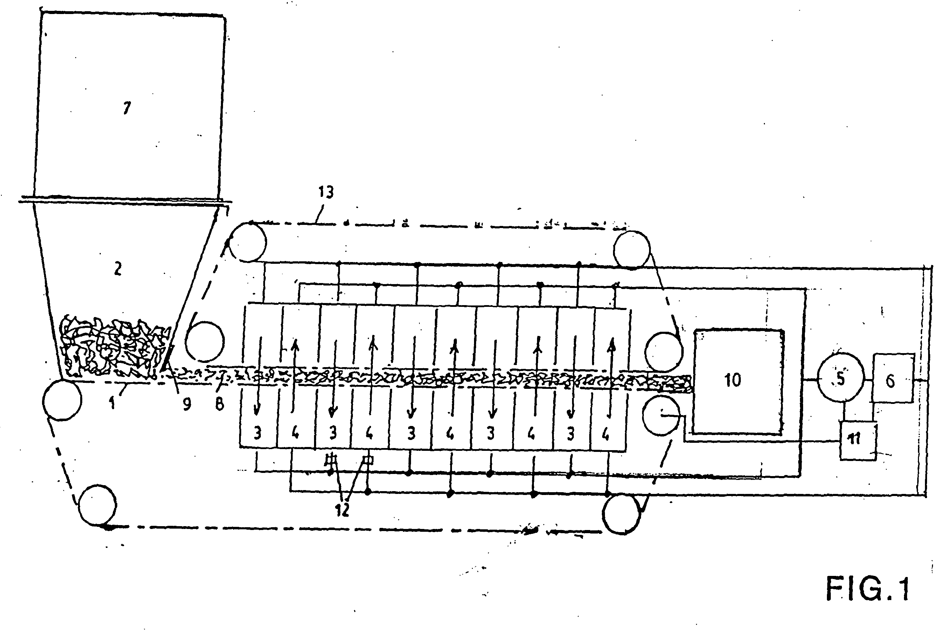

Die Vorrichtung der Fig.1 zur Herstellung von Kunststoffformteilen aus oberflächlich erhitzten geshredderten Kunststoffteilchen besteht aus einem Transportband 1, das nach Durchlaufen einer Material-Aufgabestation 2 durch Kanäle 3,4 läuft, in denen ein heißes gasförmiges Medium als Heizmedium von einem Gebläse 5 getrieben und von einer Heizvorrichtung 6 erhitzt umläuft. Die aus dem Silo 7 der Material-Aufgabestation 2 auf das Transportband geschütteten Kunststoffteilchen 8 sind durch einen Abstreifer 9 nur in einer Höhe von nur einer oder wenigen übereinander liegenden Kunststoffteilchen 8 aufschichtet. Das Heizmedium durchläuft die Kanäle 3 von unten nach oben, die Kanäle 4 in umgkehrter Richtung von oben nach unten. Die Kanäle 3 und 4 sind jeweils benachbart. Auf diese Weise werden die auf dem Transportband liegenden Kunststoffteichen 8 wechselseitig von oben und von unten her durchströmt und erhitzt. Dabei läßt man das Transportband 1 mit einer Geschwindigkeit laufen, bei der am Ende des Transporbandes 1 die Kernbereiche der Kunststoffteilchen 8 nicht aufgeschmolzen sind. Dem Transportband 1 ist sodann eine mechanische Preß- oder Formvorrichtung 10 nachschaltet.

Der Vorrichtung zum Anschmelzen der Kunststoffteilchen 8 ist eine Steuervorrichtung 11 zugeordnet, die die Transportbandgeschwindigkeit und die Heizmediumtemperatur in Abhängigkeit von dem Oberflächen-Anschmelz-Zustand der Kunststoffteilchen steuert.

Wenn man bei Kunststoffen mit niedrger Schmelztemperatur nicht sämtliche Kanäle 3,4 benötigt, besteht durch den Einbau von Ventilen 12 die Möglichkeit, daß man Kanäle 3,4 einzeln oder paaweise aus dem Heizmediumumlauf abschaltet.

Dem Transportband 1, auf dem die zu erhitzenden Kunststoffteilchen 8 liegen, kann noch ein zweites Transportband 13 zugeordnet sein. Im intermittierenden Betrieb der Anlage können die Transportbänder 1,13 Bänder eine endlicher Länge aufweisen und im Betrieb hin und hergewickelt werden, für den fortlaufenden Betrieb sind es endlose Bänder.

Die benachbarten Kanäle oder Kammern haben nicht nur die Aufgabe, dass ein Strömungsrichtungswechsel möglich ist, sondern dass keine bevorzugten Durchströmungsstellen aus der gesamten Förderbandstrecke entstehen. Es kann in benachbarten Kammern die Strömungsrichtung des Heizmediums gleich sein oder durch Ventilumstellungen entgegengesetzt sein.

In benachbarten Kammern kann weiterhin verändert werden:
- Die Strömungsverteilung des Heizmediums parallel zur Bandlaufrichtung und senkrecht dazu zur Erzielung bestimmter Verwirbelungseffekte und Querströmungen in der Schüttung;
- Die Höhe des statischen Vordruckes, d.h. einstellbare Strömungsgeschwindigkeit des Heizmediums;
- Die Temperatur des Heizmediums.

Bei der Durchführung des Verfahrens kann die die Kunststoffteilchen tragende Auflage fest stehen oder bewegt werden und auch die Heißgasstromzuführung kann ebenfalls fest stehen oder bewegt werden. Es ergeben sich drei Fälle:
- Die Heizgaszuführung steht fest, die Auflage für die Kunststoffteilchen wird bewegt;
- Die Kunststoffteilchenauflage steht fest, die Heißgasstromzufuhr wird bewegt;
- Die Heißgasstromzufuhr und Auflage für die Kunststoffteilchen stehen fest.

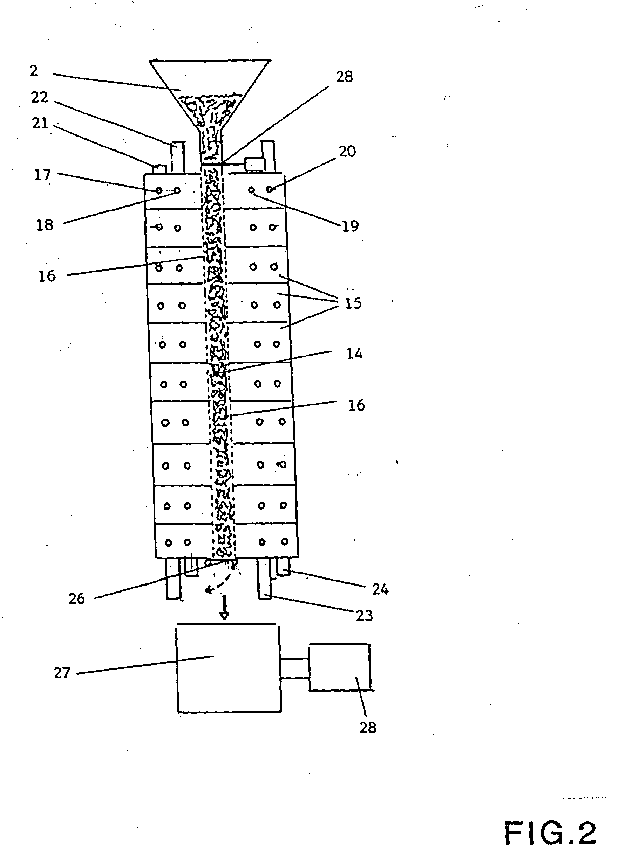

In Fig.2 befindet sich unter der Materialaufgabestation 2 ein vertikaler Schacht 14, der von den Heißluftkanälen 15 gequert wird. Für den Heißluftdurchtritt sind die Schachtwände 16 luftdurchlässig gelocht. Jeder Heißluftkanal 15 weist vier Löcher 17,18, 19,20 auf, die mit Löchern in Schiebern 21,22,23,24 kommunizieren. Die Schieber 21,23 dienen der Heißluftzufuhr in die Kanäle 15, die Schieber 22,24 dem Auslaß von abgekühlter Heißluft aus den Känälen 15. Die Bewegung der Schieber wird in ständigem Wechsel so synchronisiert gesteuert, daß im einen Kanal 15 Heißluft aus dem Schieber 21 durchdas Loch 17 in den Kanal 15 strömt und durch das Loch 19 und den Schieber 23 wieder verläßt, während in dem benachbarten Kanal 15 bzw. den benachbarten Kanälen 15 Heißluft über den Schieber 24 durch die Löcher 20 in die Kanäle 15 eintritt und durch die Löcher 18 über den Schieber 22 wieder verläßt.

Ein Absperrschieber 25 unter der Materialaufgabestation 2 sperrt die Schachtfüllung ab, ein Tor 26 am unteren Ende des Schachtes 14 dient bei Öffnung der Schachtentleerung am Ende der Anschmelzperiode der Kunststoffteilchen. Bei Öffnung des Tores 26 fallen die angeschmolzenen Kunststoffteilchen in die Form 27, in der mittels der Kraft der Presse 28 die Kunststoffformteile hergestellt werden.

Die erfindungsgemäße Vorrichtung und das Verfahren eignen sich aber nicht nur zum Anschmelzen einlagiger oder mehrlagiger Kunststoffteilchen, sondern bei entsprechender Verweilzeit auf der Auflage bei vorgegebener Heizmediumtemperatur bzw. Temperatur des Wärmestrahlers auch zum vollkommenen Durchschmelzen oder Aufschmelzen der Kunststoffteilchen, so daß die Schmelzemasse beispielsweise für dünnwandige Kunststoffteile eingesetzt werden kann.

Diese Möglichkeit bietet ein weiteres Anwendungsgebiet der erfindungsgemäßen Vorrichtung, ohne daß die Vorrichtung mit zusätzlichen technischen Ausrüstungen versehen werden muß.

### Liste der Bezugszeichen

- 1: Transportband
- 2: Materialaufgabestation
- 3: Kanal
- 4: Kanal
- 5: Gebläse
- 6: Heizvorrichtung
- 7: Silo
- 8: Kunststoffteilchen
- 9: Abstreifer
- 10: Preß-oder Formvorrichtung
- 11: Steuervorrichtung
- 12: Ventil
- 13: Transportband
- 14: vertikaler Schacht
- 15: Heißluftkanälen
- 16: gelochte Schachtwand
- 17: Loch
- 18: Loch
- 19: Loch
- 20: Loch
- 21: gelochter Schieber
- 22: gelochter Schieber
- 23: gelochter Schieber
- 24: gelochter Schieber
- 25: Absperrschieber
- 26: Tor
- 27: Form
- 28: Presse

## Patentansprüche

1. Verfahren zur Herstellung von Gegenständen aus Kunststoff durch oberflächliche Erhitzung von auf einem Transportband (1) liegenden Kunststoffteilchen (8) bis auf Schmelztemperatur an ihrer Oberfläche und anschließender Formgebung zu einem Produkt unter Krafteinwirkung,
bei dem man vor der Wärmebehandlungsstrecke auf dem Transportband (1) die Kunststoffteilchen (8) von einer Beschichtungsvorrichtung (2) übereinanderliegend in einer Höhe von nur wenigen übereinanderliegenden Kunststoffteilchen (8) aufschichtet,
bei dem man auf die Schicht von Kunststoffteilchen (8) mit einem strömenden Heizmedium so kurzzeitig einwirkt, dass nur die Oberflächen der Kunststoffteilchen angeschmolzen werden,
**dadurch gekennzeichnet,**
**dass** man ein gelochtes Transportband verwendet, dessen Löcher kleiner sind als der Durchmesser der Kunststoffteilchen (8),
**dass** man in der Wärmebehandlungsstrecke ein gasförmiges Heizmedium in benachbart nebeneinander liegenden Kanälen (3,4) in Gegenrichtung strömen lässt,
so dass das heiße gasförmige Heizmedium die auf dem Transportband (1) liegenden Kunststoffteilchen (8) während des Transportes wechselseitig von oben und von unten durchströmt.

2. Verfahren nach Anspruch 1,
**dadurch gekennzeichnet,**
**dass** das die anzuschmelzenden Kunststoffteilchen tragende, mit Löchern versehene Transportband fest steht und eine den Heizgasstrom auf die Kunststoffteilchen richtende Düsenanordnung über sie hinwegfährt.

3. Verfahren nach Anspruch 1,
**dadurch gekennzeichnet,**
**dass** das die anzuschmelzenden Kunststoffteilchen tragende, mit Löchern versehene Transportband fest steht und eine den Heizgasstrom auf die Kunststoffteilchen richtende Düsenanordnung stationär angeordnet ist.

4. Verfahren nach Anspruch 1,
**dadurch gekennzeichnet,**
**dass** man auf dem Transportband die Kunststoffteilchen in einer Höhe von vorzugsweise einer oder nur wenigen übereinander liegender Kunststoffteilchen aufschichtet,
**dass** man das Transportband durch eine Vielzahl von einander benachbarten Kanälen führt, in denen das Heizmedium jeweils in entgegengesetzter Richtung strömt,
**dass** man das Transportband mit einer Geschwindigkeit laufen lässt, bei der am Ende des Transportbandes die Kernbereiche der Kunststoffteilchen nicht aufgeschmolzen sind,
und **dass** man dem Transportband eine mechanische Preß- oder Formvorrichtung nachschaltet.

5. Verfahren nach Anspruch 1,
**dadurch gekennzeichnet,**
**dass** man die Transportbandgeschwindigkeit und die Heizmediumtemperatur in Abhängigkeit von dem Oberflächen-Anschmelz-Zustand der Kunststoffteilchen steuert.

6. Verfahren nach Anspruch 1,
**dadurch gekennzeichnet,**
**dass** man an der Beschickungsvorrichtung (2) die Schichthöhe der Kunststoffteilchen auf dem Transportband einstellt.

7. Verfahren nach Anspruch 1,
**dadurch gekennzeichnet,**
**dass** man Kanäle einzeln oder paarweise aus dem Heizmediumumlauf abschaltet.

8. Verfahren nach Anspruch 1,
**dadurch gekennzeichnet,**
**dass** man zwischen eine Gruppe von Kanälen eine weitere Beschickungsvorrichtung anordnet.

9. Verfahren nach Anspruch 8,
**dadurch gekennzeichnet,**
**dass** man der weiteren Beschickungsvorrichtung einen Rechen als Mischvorrichtung nachschaltet.

10. Verfahren nach Anspruch 1,
**dadurch gekennzeichnet,**
**dass** man Kunststoffteilchen unterschiedlicher chemischer Zusammensetzung und/oder unterschiedlichen Schmelzpunktes zusammenmischt und der Wärmebehandlung unterzieht.

11. Verfahren nach Anspruch 1,
**dadurch gekennzeichnet,**
**dass** man bei einer Schichthöhe von einer oder von wenigen Kunststoffteilchen diese bei entsprechender Verweilzeit auf dem Transportband bei vorgegebener Heizmediumtemperatur und/oder Temperatur nicht nur anschmelzt, sondern vollkommen aufschmelzt.

12. Vorrichtung zur oberflächlichen Erhitzung von auf einem Transportband liegenden Kunststoffteilchen (8) durch ein heißes gasförmiges Medium,
bei der vor der Wärmebehandlungsstrecke eine Beschickungsvorrichtung (2) angeordnet ist, mit der die Kunststoffteilchen (8) übereinanderliegend in einer Höhe von nur wenigen übereinanderliegenden Kunststoffteilchen (8) auf dem Transportband (1) aufgeschichtet werden,
bei der das Transportband (1) mit einer Geschwindigkeit läuft, bei der am Ende des Transportbandes (1) die Kernbereiche der Kunststoffteilchen (8) nicht aufgeschmolzen sind,
und bei der dem Transportband (1) eine mechanische Preß- oder Formvorrichtung nachgeschaltet ist,
**dadurch gekennzeichnet,**
**dass** als Heizmedium ein heißes gasförmiges Medium verwendet wird,
**daß** das Transportband (1) durch eine Vielzahl von einander benachbarten Kanälen (3,4) geführt ist, in denen das Heizmedium jeweils in entgegengesetzter Richtung strömt,
und **daß** das Tranportband (1) mit einer Vielzahl von Löchern versehen ist, deren Durchmesser kleiner ist als die Durchmesser der Kunststoffteilchen (8),
wobei das heiße gasförmige Medium die auf dem Transportband (1) liegenden Kunststoffteilchen (8) während des Transportes wechselseitig von oben und von unten durchströmt.

13. Vorrichtung nach Anspruch 12,
**gekennzeichnet durch**
eine Steuerungsvorichtung (11) für die Transportbandgeschwindigkeit und die Heizmediumtemperatur.

14. Vorrichtung nach Anspruch 12,
**dadurch gekennzeichnet,**
**daß** an der Beschickungsvorrichtung die Schichthöhe der Kunststoffteilchen auf dem Transportband einstellbar ist.

15. Vorrichtung nach Anspruch 12,
**dadurch gekennzeichnet,**
**daß** Kanäle einzeln oder paarweise aus dem Heizmediumumlauf abschaltbar sind.

16. Vorrichtung nach Anspruch 12,
**dadurch gekennzeichnet,**
**daß** zwischen einer Gruppe von Heizmediumpaaren eine weitere Beschickungsvorrichtung angeordnet ist.

17. Vorrichtung nach Anspruch 12,
**dadurch gekennzeichnet,**
**daß** der weiteren Beschickungsvorrichtung ein Rechen als Mischvorrichtung nachgeschaltet ist.

18. Vorrichtung nach Anspruch 12,
**dadurch gekennzeichnet,**
**daß** das strömende Heizmedium ein Gas ist, und
**daß** die Kunststoffteilchen in einem vertikalen oder schrägen Schacht mit durchlochten und von dem Heizmedium durchströmten Schachtwänden befindlich sind,
den sie durchfließen.

19. Vorrichtung nach Anspruch 12,
**dadurch gekennzeichnet,**
**daß** das strömende Heizmedium ein Gas ist, und
**daß** die Kunststoffteilchen in einem vertikalen oder schrägen Schacht mit durchlochten und von dem Heizmedium durchströmten Schachtwänden befindlich sind,
und **daß** der Schacht am untereren Ende ein Tor aufweist, das die Kunststoffteilchen während der Behandlungsphase mit dem Heizmedium aufstaut und welches am Ende der jeweiligen Behandlungsphase geöffnet wird.

20. Vorrichtung nach Anspruch 18 oder 19,
**dadurch gekennzeichnet,**
**daß** den das Heizmedium führenden, quer zum Schacht verlaufenden Kanälen eine Steuerschieberanordnung vor- und nachgeschaltet ist, die das Heizmedium in den Kanälen zeitlich nacheinander hin- und her strömen läßt.

21. Vorrichtung nach Ansprüche 20,
**dadurch gekennzeichnet,**
**daß** die Steuerschieberanordnung mindestens vier bewegliche Steuerschieber aufweist, die paarweise an den dem Schacht abgekehrten Enden der das Heizmedium führenden Kanäle angeordnet sind und
die im Takt paarweise gegeneinander verschoben werden, wobei jeder Heizmedium führende Kanal an seinen Enden ein dem jeweiligen Steuerschieber zugeordnetes Loch aufweist.

22. Vorrichtung nach Anspruch 12,
**dadurch gekennzeichnet,**
**daß** das gasdurchlässige Transportband für die anzuschmelzenden Kunststoffteilchen beweglich ist, die Heizkanalanordnung hingegen fest.

23. Vorrichtung nach Anspruch 12,
**dadurch gekennzeichnet,**
**daß** innerhalb der Kanäle ein Geschwindigkeitsgefälle im strömenden Heizmedium herrscht.

24. Vorrichtung nach Anspruch 12,
**dadurch gekennzeichnet,**
**daß** die Erhitzungsstrecke zwei voneinander beabstandete Beschickungsvorrichtungen aufweist, eine erste am Anfang der Behandlungsstrecke liegende für ein Material mit höherer Schmelztemperatur und eine zweite für ein Material mit niedrigerer Schmelztemperatur.

25. Vorrichtung nach Anspruch 12,
**dadurch gekennzeichnet,**
**daß** innerhalb eines oder mehrerer Kanäle Strömungsinhomogenitäten vorzugsweise durch einen seitlichen Einlaß des Heizmediums herrschen.

26. Vorrichtung nach Anspruch 12,
**dadurch gekennzeichnet,**
**daß** in den einzelnen Kanälen durch Ventile, Schieber, Klappen, Mischvorrichtungen und andere Verstellmöglichkeiten des Heizmediumstromes verändert werden kann:
- Die Strömungsverteilung des Heizmediums parallel zur Bandlaufrichtung und senkrecht dazu zur Erzielung bestimmter Verwirbelungseffekte und Querströmungen in der Schüttung;
- Die Höhe des statischen Vordruckes, d.h. einstellbare Strömungsgeschwindigkeit des Heizmediums;
- Die Temperatur des Heizmediums.

27. Vorrichtung nach Anspruch 12,
**dadurch gekennzeichnet,**
**daß** das die Kunststoffteilchen tragende Transportband fest steht oder bewegt wird und/oder die Heißgasstromzuführung fest steht oder bewegt wird,wobei
- die Heizgaszuführung steht fest, das Transportband für die Kunststoffteilchen bewegt wird; oder
- das Transportband fest steht, die Heißgasstromzufuhr bewegt wird;
- die Heißgasstromzufuhr und Transportband für die Kunststoffteilchen fest stehen.

## Claims

1. Method for producing articles made of plastics material by surface heating of plastics material particles (8) located on a conveyer belt (1) to melting temperature at their surface and subsequent shaping into a product with the action of force, in which prior to the heat treatment section, the plastics material particles (8) are piled up by a feed device (2) on top of one another on the conveyer belt at a height of only a few plastics material particles (8) located on top of one another, in which the layer of plastics material particles (8) is acted upon briefly by a flowing heat medium in such a way that only the surfaces of the plastics material particles start to melt, **characterised in that** a perforated conveyer belt is used, the holes of which are smaller than the diameter of the plastics material particles (8), **in that** a gaseous heating medium is allowed to flow in opposite directions in the heat treatment section in neighbouring channels (3, 4) located next to one another, so the hot gaseous heating medium flows through the plastics material particles (8) located on the conveyer belt (1) alternately from above and below during transportation.

2. Method according to claim 1, **characterised in that** the conveyer belt, which carries the plastics material particles which are to be melted, and is provided with holes is fixed and a nozzle arrangement directing the hot gas flow onto the plastics material particles travels over them.

3. Method according to claim 1, **characterised in that** the conveyer belt which carries the plastics material particles to be melted, and is provided with holes is fixed and a nozzle arrangement directing the hot gas flow onto the plastics material particles is stationarily arranged.

4. Method according to claim 1, **characterised in that** the plastics material particles are piled up at a height of preferably one or only a few plastics material particles located on top of one another on the conveyer belt, **in that** the conveyer belt is guided through a plurality of adjacent channels, in which the heating medium flows, in each case, in opposite directions, **in that** the conveyer belt is allowed to run at a speed, at which the core regions of the plastics material particles at the end of the conveyer belt have not yet melted, and **in that** a mechanical pressing or shaping device is connected downstream from the conveyer belt.

5. Method according to claim 1, **characterised in that** the conveyer belt speed and the heating medium temperature are controlled as a function of the surface melting state of the plastics material particles.

6. Method according to claim 1, **characterised in that** the layer height of the plastics material particles on the conveyer belt is adjusted at the feed device (2).

7. Method according to claim 1, **characterised in that** channels are switched off individually or in pairs from the heating medium circulation.

8. Method according to claim 1, **characterised in that** a further feed device is arranged between a group of channels.

9. Method according to claim 8, **characterised in that** a rake is connected downstream from the further feed device, as the mixing device.

10. Method according to claim 1, **characterised in that** plastics material particles with a different chemical composition and/or different melting point are mixed together and subjected to the heat treatment.

11. Method according to claim 1, **characterised in that** with a layer height of one or a few plastics material particles, this does not only start to melt with a corresponding dwell time on the conveyer belt at a predetermined heating medium temperature and/or temperature, but melts completely.

12. Device for surface heating of plastics material particles (8) located on a conveyer belt by a hot gaseous medium, in which a feed device (2) is arranged prior to the heat treatment section, with which feed device the plastics material particles (8) are piled up on top of one another at a height of only a few plastics material particles (8) on top of one another on the conveyer belt (1), in which the conveyer belt (1) runs at a speed, at which the core regions of the plastics material particles (8) are not melted at the end of the conveyer belt (1), and in which a mechanical pressing or shaping device is connected downstream from the conveyer belt (1), **characterised in that** a hot gaseous medium is used as the heating medium, **in that** the conveyer belt (1) is guided through a plurality of adjacent channels (3, 4), in which the heating medium flows in each case in opposite directions, and **in that** the conveyer belt (1) is provided with a plurality of holes, the diameter of which is smaller than the diameters of the plastics material particles (8), the hot gaseous medium flowing through the plastics material particles (8) located on the conveyer belt (1) alternately from above and below during transportation.

13. Device according to claim 12, **characterised by** a control device (11) for the conveyer belt speed and the heating medium temperature.

14. Device according to claim 12, **characterised in that** the layer height of the plastics material particles on the conveyer belt can be adjusted at the feed device.

15. Device according to claim 12, **characterised in that** channels can be switched off individually or in pairs from the heating medium circulation.

16. Device according to claim 12, **characterised in that** a further feed device is arranged between a group of heating medium pairs.

17. Device according to claim 12, **characterised in that** a rake is connected downstream from the further feed device, as the mixing device.

18. Device according to claim 12, **characterised in that** the flowing heating medium is a gas, and **in that** the plastics material particles are located in a vertical or oblique shaft with shaft walls which are perforated and through which the heating medium flows, through which shaft they flow.

19. Device according to claim 12, **characterised in that** the flowing heating medium is a gas, and **in that** the plastics material particles are located in a vertical or oblique shaft with perforated shaft walls through which the heating medium flows, and **in that** the shaft has a door at the lower end, which retains the plastics material particles during the treatment phase and is opened at the end of the respective treatment phase.

20. Device according to claim 18 or 19, **characterised in that** a control slide arrangement is connected upstream and downstream from the channels guiding the heating medium and extending transverse to the shaft, which control slide arrangement allows the heating medium to flow back and forth in the channels successively with respect to time.

21. Device according to claim 20, **characterised in that** the control slide arrangement has at least four moveable control slides, which are arranged in pairs at the ends of the channels guiding the heating medium remote from the shaft and which are displaced with respect to one another in pairs in a cycle, each channel guiding heating medium having, at its ends, a hole associated with the respective control slide.

22. Device according to claim 12, **characterised in that** the gas-permeable conveyer belt for the plastics material particles to be melted is moveable while the heating channel arrangement, on the other hand, is fixed.

23. Device according to claim 12, **characterised in that** a speed gradient prevails in the flowing heating medium inside the channels.

24. Device according to claim 12, **characterised in that** the heating section has two feed devices spaced apart from one another, a first one located at the start of the treatment section for a material with a higher melting temperature and a second one for a material with a lower melting temperature.

25. Device according to claim 12, **characterised in that** flow non-homogeneities prevail preferably through a lateral inlet of the heating medium within one or more channels.

26. Device according to claim 12, **characterised in that** in the individual channels, the following can be changed by means of valves, slides, flaps, mixing devices and other adjustment possibilities for the heating medium flow:
- the flow distribution of the heating medium parallel to the belt running direction and perpendicular thereto to achieve certain swirling effects and transverse flows in the bulk product;
- the level of the static initial pressure, i.e. adjustable flow speed of the heating medium;
- the temperature of the heating medium.

27. Device according to claim 12, **characterised in that** the conveyer belt carrying the plastics material particles is fixed or is moved and/or the hot gas flow supply is fixed or is moved, wherein
- the hot gas supply is fixed and the conveyer belt for the plastics material particles is moved; or
- the conveyer belt is fixed and the hot gas flow supply is moved;
- the hot gas flow supply and conveyer belt for the plastics material particles are fixed.

## Revendications

1. Procédé de fabrication d'objets en matière plastique via échauffement superficiel de particules de matières plastiques (8) se trouvant sur une bande transporteuse (1) jusqu'à la température de fusion au niveau de sa surface et mise en forme consécutive en un produit en exerçant une force,
dans lequel les particules de matières plastiques (8) sont entassées superposées sur une hauteur de quelques particules de matières plastiques superposées (8) avant le parcours de traitement thermique sur la bande transporteuse (1) par un dispositif d'alimentation (2), dans lequel l'on agit momentanément sur la couche de particules de matières plastiques (8) avec un agent chauffant s'écoulant de manière à ce que seules les surfaces des particules de matières plastiques soient fondues,
**caractérisé en ce**
**que** l'on utilise une bande transporteuse perforée dont les perforations sont inférieures au diamètre des particules de matières plastiques (8) et en ce que l'on laisse s'écouler un agent chauffant gazeux en sens inverse dans le parcours de traitement thermique dans des canaux adjacents (3, 4) de manière à ce que l'agent chauffant gazeux chaud traverse réciproquement par le haut et par le bas les particules de matières plastiques (8) se trouvant sur la bande transporteuse (1) au cours du transport.

2. Procédé selon la revendication 1, **caractérisé en ce que** la bande transporteuse munie de perforations et portant les particules de matières plastiques à fondre est fixe et un système de buses orientant le flux de gaz chauffant sur les particules de matières plastiques passe par-delà celles-ci.

3. Procédé selon la revendication 1, **caractérisé en ce que** la bande transporteuse munie de perforations et portant les particules de matières plastiques à fondre est fixe et un système de buses orientant le flux de gaz chauffant sur les particules de matières plastiques est agencé de manière stationnaire.

4. Procédé selon la revendication 1, **caractérisé en ce**
■ **que** les particules de matières plastiques sont entassées sur la bande transporteuse sur une hauteur de préférence d'une ou de quelques particules de matières plastiques superposées,
■ **en ce que** la bande transporteuse est guidée à travers une pluralité de canaux adjacents les uns aux autres, dans lesquels l'agent chauffant s'écoule respectivement à contresens,
■ **en ce que** l'on laisse tourner la bande transporteuse avec une vitesse, à laquelle les zones du coeur des particules de matières plastiques ne sont pas fondues à la fin de la bande transporteuse,
■ et **en ce qu**'un dispositif de moulage ou de modelage mécanique est placé en aval de la bande transporteuse.

5. Procédé selon la revendication 1, **caractérisé en ce que** l'on commande la vitesse de la bande transporteuse et la température de l'agent chauffant en fonction de l'état de fusion superficielle des particules de matières plastiques.

6. Procédé selon la revendication 1, **caractérisé en ce que** l'on règle la hauteur de couche des particules de matières plastiques sur la bande transporteuse au niveau du dispositif d'alimentation (2).

7. Procédé selon la revendication 1, **caractérisé en ce que** l'on déconnecte des canaux individuellement ou par paires de la circulation d'agent chauffant.

8. Procédé selon la revendication 1, **caractérisé en ce que** l'on agence un autre dispositif d'alimentation entre un groupe de canaux.

9. Procédé selon la revendication 8, **caractérisé en ce que** l'on place un râteau en tant que dispositif mélangeur en aval de l'autre dispositif d'alimentation.

10. Procédé selon la revendication 1, **caractérisé en ce que** l'on mélange ensemble des particules de matières plastiques de différentes constitutions chimiques et/ou à différents points de fusion et on les soumet au traitement thermique.

11. Procédé selon la revendication 1, **caractérisé en ce que** les particules de matières plastiques sont fondues non seulement de manière superficielle, mais sont également entièrement fondues pour une hauteur de couche d'une ou de quelques particules de matières plastiques en cas de temps de séjour correspondant sur la bande transporteuse pour une température d'agent chauffant prédéfinie et/ou température prédéfinie.

12. Dispositif destiné à l'échauffement superficiel de particules de matières plastiques (8) se trouvant sur une bande transporteuse grâce à un agent gazeux chaud,
■ dans lequel un dispositif d'alimentation (2) est agencé avant le parcours de traitement thermique et avec lequel les particules de matières plastiques (8) sont entassées sur la bande transporteuse (1), superposées sur une hauteur de, quelques particules de matières plastiques superposées (8),
■ dans lequel la bande transporteuse (1) tourne avec une vitesse, à laquelle les zones du coeur des particules de matières plastiques (8) ne sont pas fondues à la fin de la bande transporteuse (1), et
■ dans lequel un dispositif de moulage ou de modelage mécanique est placé en aval de la bande transporteuse (1),
**caractérisé en ce**
■ **qu**'un agent gazeux chaud est utilisé en tant qu'agent chauffant,
■ **en ce que** la bande transporteuse (1) est guidée à travers une pluralité de canaux adjacents les uns aux autres (3, 4), dans lesquels l'agent chauffant s'écoule respectivement à contresens et en ce que la bande transporteuse (1) est pourvue d'une pluralité de perforations, dont le diamètre est inférieur au diamètre des particules de matières plastiques (8),
■ l'agent gazeux chaud traversant réciproquement par le haut et par le bas les particules de matières plastiques (8) se trouvant sur la bande transporteuse (1) au cours du transport.

13. Dispositif selon la revendication 12, **caractérisé par** un dispositif de commande (11) pour la vitesse de la bande transporteuse et la température de l'agent chauffant.

14. Dispositif selon la revendication 12, **caractérisé en ce que** la hauteur de couche des particules de matières plastiques sur la bande transporteuse est réglable au niveau du dispositif d'alimentation.

15. Dispositif selon la revendication 12, **caractérisé en ce que** des canaux peuvent être déconnectés individuellement ou par paires de la circulation d'agent chauffant.

16. Dispositif selon la revendication 12, **caractérisé en ce qu'**un autre dispositif d'alimentation est agencé entre un groupe de paires d'agent chauffant.

17. Dispositif selon la revendication 12, **caractérisé en ce qu'**un râteau est placé en aval de l'autre dispositif d'alimentation en tant que dispositif mélangeur.

18. Dispositif selon la revendication 12, **caractérisé en ce que** l'agent chauffant s'écoulant est un gaz et **en ce que** les particules de matières plastiques se trouvent dans une cuve verticale ou inclinée avec des parois de cuve perforées et traversées par l'agent chauffant que ces dernières traversent.

19. Dispositif selon la revendication 12, **caractérisé en ce que** l'agent chauffant s'écoulant est un gaz et **en ce que** les particules de matières plastiques se trouvent dans une cuve verticale ou inclinée avec des parois de cuve perforées et traversées par l'agent chauffant et **en ce que** la cuve présente une porte au niveau de l'extrémité inférieure, ladite porte retenant les particules de matières plastiques au cours de la phase de traitement avec l'agent chauffant et étant ouverte à la fin de la phase de traitement respective.

20. Dispositif selon la revendication 18 ou 19, **caractérisé en ce qu'**un agencement de tiroirs de commande est placé en amont ainsi qu'en aval des canaux conduisant l'agent chauffant et évoluant en travers de la cuve, ledit agencement de tiroirs de commande laissant s'écouler l'agent chauffant en va-et-vient et successivement dans le temps dans les canaux.

21. Dispositif selon la revendication 20, **caractérisé en ce que** l'agencement de tiroirs de commande présente au moins quatre tiroirs de commande mobiles, qui sont agencés par paires aux extrémités opposées à la cuve des canaux conduisant l'agent chauffant et qui sont en mouvement en cadence et par paires les uns par rapport aux autres, sachant que chaque canal conduisant de l'agent chauffant présente à ses extrémités une perforation affectée au tiroir de commande respectif.

22. Dispositif selon la revendication 12, **caractérisé en ce que** la bande transporteuse perméable aux gaz pour les particules de matières plastiques à fondre est mobile, l'agencement de canaux chauffants est en revanche fixe.

23. Dispositif selon la revendication 12, **caractérisé en ce qu'**un gradient de vitesse négatif règne à l'intérieur des canaux dans l'agent chauffant s'écoulant.

24. Dispositif selon la revendication 12, **caractérisé en ce que** le parcours d'échauffement présente deux dispositifs d'alimentation espacés l'un de l'autre, un premier situé au début du parcours de traitement pour un matériau avec température de fusion plus élevée et un second pour un matériau avec température de fusion basse.

25. Dispositif selon la revendication 12, **caractérisé en ce que** des inhomogénéités dans le flux règnent à l'intérieur d'un ou de plusieurs canaux de préférence en raison d'une admission latérale de l'agent chauffant.

26. Dispositif selon la revendication 12, **caractérisé en ce que** dans chacun des canaux, grâce à des soupapes, des tiroirs, des clapets, des dispositifs mélangeurs et d'autres possibilités de réglage du flux de l'agent chauffant, les éléments suivants peuvent être modifiés :
■ la distribution du flux de l'agent chauffant parallèlement au sens de déroulement de la bande et perpendiculairement à celui-ci afin d'obtenir des effets de tourbillonnement et des flux transversaux définis dans le déversement ;
■ la hauteur statique de la pression d'admission, c'est-à-dire la vitesse de flux réglable de l'agent chauffant ;
■ la température de l'agent chauffant.

27. Dispositif selon la revendication 12, **caractérisé en ce que** la bande transporteuse portant les particules de matières plastiques est fixe ou est en mouvement et/ou l'alimentation du courant de gaz chaud est fixe ou est en mouvement, sachant que
■ l'alimentation du gaz chauffant est fixe, la bande transporteuse pour les particules de matières plastiques est en mouvement ; ou
■ la bande transporteuse est fixe, l'arrivée de courant de gaz chaud est en mouvement ;
■ l'arrivée de courant de gaz chaud et la bande transporteuse pour les particules de matières plastiques sont fixes.
